(19) **Europäisches Patentamt**

**European Patent Office**

**Office européen des brevets**

(11) **EP 1 383 186 A1**

(12) **EUROPEAN PATENT APPLICATION**
published in accordance with Art. 158(3) EPC

(43) Date of publication:
**21.01.2004 Bulletin 2004/04**

(51) Int Cl.⁷: **H01M 4/96**, H01M 4/88,
H01M 4/10

(21) Application number: **02705356.0**

(22) Date of filing: **19.03.2002**

(86) International application number:
**PCT/JP2002/002619**

(87) International publication number:
**WO 2002/075831 (26.09.2002 Gazette 2002/39)**

(84) Designated Contracting States:
**AT BE CH CY DE DK ES FI FR GB GR IE IT LI LU MC NL PT SE TR**

(30) Priority: **19.03.2001 JP 2001078196**

(71) Applicants:
• **NEC Corporation**
**Minato-ku, Tokyo 108-8001 (JP)**
• **JAPAN SCIENCE AND TECHNOLOGY CORPORATION**
**Kawaguchi-shi, Saitama 332-0012 (JP)**

(72) Inventors:
• **YOSHITAKE, Tsutomu, c/o NEC Corporation Tokyo 108-8001 (JP)**
• **KUBO, Yoshimi, c/o NEC Corporation Tokyo 108-8001 (JP)**
• **IIJIMA, Sumio Nagoya-shi, Aichi 468-0011 (JP)**
• **YUDASAKA, Masako Tsukuba-shi, Ibaraki 300-2635 (JP)**

(74) Representative: **Patentanwälte Wenzel & Kalkoff Postfach 73 04 66 22124 Hamburg (DE)**

(54) **FUEL CELL ELECTRODE, AND FUEL CELL COMPRISING THE ELECTRODE**

(57) A solid polymer electrolyte - catalyst combined electrode which comprises a solid polymer electrolyte and carbon particles carrying a catalytic material. The solid polymer fuel cell electrode contains carbon particles which are monolayer carbon nano-hom aggregates. The monolayer carbon nano-homs are made up of monolayer carbon nano-tubes of specific structures each having a conical shape at one end, and are aggregated spherically. A solid polymer fuel cell using the electrode is also provided.

**FIG. 1**

**Description**

Technical Field

The present invention relates to an electrode for the use in a fuel cell and to a fuel cell using the electrode.

Background Art

In general, a fuel cell includes a positive electrode, a negative electrode, and an electrolyte (electrolytic solution) disposed therebetween. The fuel cell generates power by feeding oxygen (or air) as an oxidizer to the positive electrode and hydrogen as a fuel to the negative electrode, which induce an electrochemical reaction.

In the electrochemical reaction at each electrode, a reaction represented by the following formula (1) occurs at the negative electrode, while a reaction represented by the following formula (2) occurs at the positive electrode:

$$H_2 \rightarrow 2H^+ + 2e^- \qquad (1)$$

$$1/2O_2 + 2H^+ + 2e^- \rightarrow H_2O \qquad (2)$$

Fuel cells are classified into various types depending on the types of the electrolytes. Typically, the fuel cells are roughly classified into an alkali type, a solid polymer electrolyte type, a phosphoric acid type, a fused carbonate type, and a solid electrolyte type. Among them, the solid polymer fuel cell is noted at present, since such cell can generate power as high as $1 \ A/cm^2$ or more at normal temperature and normal pressure. The solid polymer fuel cell includes an ion exchange membrane such as a perfluorosulfonic acid film as an electrolyte, and respective electrodes, i.e., negative and positive electrodes, adhered to both surfaces of the ion exchange film. Each electrode comprises a mixture of a polymer solid electrolyte and carbon substances carrying a catalytic material.

In such a construction, hydrogen gas fed to the negative electrode reaches the catalyst through pores of the electrode, and is converted to hydrogen ions by removing electrons with the aid of the catalyst. The hydrogen ions reach the positive electrode through the electrolytes within the electrodes and the solid polymer electrolyte membrane between the electrodes. Then, oxygen fed to the positive electrode is reacted with electrons flowed via an external circuit to produce water, as represented by the above-described equations.

The electrons removed from hydrogen are evolved to the external circuit through a catalyst carrier within the electrodes, and flow into the positive electrode via the external circuit. As a result, the electrons flow from the negative electrode to the positive electrode in the external circuit to generate power.

In order to improve the properties of the solid polymer fuel cell, a catalytic material having high catalytic activity should be used. Also, the electrode should have improved properties. In other words, hydrogen gas and oxygen gas for use in the electrode reactions should be well-diffused in the electrodes, and hydrogen ions and electrons generated by the electrode reactions should be highly conductive. Accordingly, the electrodes have a porous structure including a number of pores. In the porous structure, the solid polymer electrolyte is combined with the carbon substances carrying the catalytic material. The solid polymer electrolyte becomes a hydrogen ion conductive channel, and the carbon substances become an electron conductive channel. The pores function as feed and discharge channels of oxygen gas, hydrogen gas and purified water. In view of the above, a fine structure of each electrode, an improved production method, and a controlled solid polymer electrolyte amount in each electrode are important factors for improving the properties.

The amount and the dispersibility of the catalytic material carried vary dependent on the properties and the fine structure of the carbon substances. Therefore, catalytic activity is significantly different. Conductivities of the reaction gas, hydrogen ions and electrons vary depending on the structures of the carbon substances, i.e., pore distribution. Thus, the fuel cell properties may be changed greatly. For example, when the carbon substances have a large average particle size and the electrodes have small specific surface areas, the amount of the catalytic material carried is decreased and the dispersibility is lowered, whereby the fuel cell properties tend to be decreased. On the other hand, when the carbon substances have a very small average particle size, the pores have very small, and the electrodes have very large specific surface areas, the amount of the catalytic material carried is increased. However, the catalytic efficiency is decreased since the conductivities of the reaction gas and the like are significantly decreased and the solid polymer electrolyte cannot be penetrated into the pores. It may be difficult to improve the fuel cell properties.

In summary, the properties of a fuel cell, especially a solid polymer fuel cell, cannot be sufficiently improved without optimizing the structure and the shape of the carbon substances.

Hitherto, almost no review has been made on the correlation of the fine structures of the carbon substances in a solid polymer fuel cell electrode with the properties of the fuel cell. At present, optimum properties cannot be yet provided, although various solid polymer fuel cells have been produced using various carbon substances including active carbon.

Disclosure of the Invention

An object of the present invention is to provide a fuel cell electrode showing high catalyst activity by carrying a catalytic material with high dispersibility, having excellent gas diffusion, and having high hydrogen ion conductivity and electron mobility.

Another object of the present invention is to provide a method of producing the fuel cell electrode.

Still another object of the present invention is to provide a fuel cell comprising the fuel cell electrode.

Still another object of the present invention is to provide a method of producing the fuel cell comprising the fuel cell electrode.

A first aspect of the present invention is a solid polymer electrolyte - catalyst combined fuel cell electrode comprising a solid polymer electrolyte and carbon particles carrying a catalytic material, wherein the carbon particles are monolayer carbon nano-hom aggregates in which monolayer carbon nano-horns are aggregated spherically.

A second aspect of the present invention is a solid polymer fuel cell, which comprises two electrodes at both surfaces of the solid polymer electrode films, wherein at least one of the electrodes includes a catalytic layer comprising a solid polymer electrolyte and carbon particles carrying a catalytic material, the catalytic layer being formed on one side of a gas diffusion layer, and wherein the carbon particles are monolayer carbon nano-horn aggregates in which monolayer carbon nano-horns are aggregated spherically.

A third aspect of the present invention is a method of producing a solid polymer fuel cell with any one of the above-mentioned solid polymer electrolyte - catalyst combined fuel cell electrodes, which comprises the step of forming and pressing the solid polymer electrolyte - catalyst combined fuel cell electrode including the monolayer carbon nano-hom aggregates to a solid polymer electrode film to produce an electrode-electrolyte integrated matter.

A fourth aspect of the present invention is a method of producing a solid polymer fuel cell electrode, which comprises the steps of: mixing monolayer carbon nano-horn aggregates with an organic compound solution or a mixed solution including at least one of the gold and platinum group metals or an alloy thereof, adding a reducing agent to produce catalyst particles of the gold and platinum group metals or an alloy thereof, whereby the carbon particles of the monolayer carbon nano-hom aggregates carry the catalyst particles, adding a colloid dispersion of a polymer electrolyte to the carbon particles so that the colloids are adsorbed on the carbon particles and the colloid dispersion becomes a paste, and applying, heating and drying the paste on a carbon paper.

A fifth aspect of the present invention is a method of producing a solid polymer fuel cell, which comprises the steps of: mixing monolayer carbon nano-horn aggregates with an organic compound solution or a mixed solution including at least one of the gold and platinum group metals or an alloy thereof, adding a reducing agent to produce catalyst particles of gold and platinum group metals or an alloy thereof, whereby the carbon particles of the monolayer carbon nano-horn aggregates carry the catalyst particles, adding a colloid dispersion of a polymer electrolyte to the carbon particles so that the colloids are adsorbed on the carbon particles and the colloid dispersion becomes a paste, applying, heating and drying the paste on a carbon paper, and forming and pressing the carbon paper to at least one surface of a solid polymer electrolyte sheet to produce a single cell.

A sixth aspect of the present invention is a fuel cell electrode, which comprises carbon substances carrying at least a catalytic material, wherein the carbon substances are aggregates including at least one type of carbon molecules in which six-member rings including carbon atoms constitute a rotational form and at least one end of the rotational form is closed.

A seventh aspect of the present invention is a fuel cell electrode, which comprises carbon substances carrying at least a catalytic material, wherein the carbon substances are aggregates including at least one type of carbon molecules in a spherical form in which six-member rings including carbon atoms constitute a rotational form.

An eighth aspect of the present invention is a fuel cell comprising any one of the above-mentioned fuel cell electrodes.

A ninth aspect of the present invention is a solid polymer fuel cell electrode, wherein the carbon substances and the solid polymer electrolyte form a combined matter.

A tenth aspect of the present invention is a solid polymer fuel cell comprising the solid polymer fuel cell electrode.

An eleventh aspect of the present invention is a solid polymer fuel cell, which comprises two electrodes at both surfaces of the solid polymer electrode films, wherein at least one of the electrodes includes a catalytic layer comprising a solid polymer electrolyte and carbon substances carrying a solid polymer electrolyte, the catalytic layer being formed on one side of a gas diffusion layer, and wherein the carbon substances in the catalytic layer are aggregates including at least one type of carbon molecules in which six-member rings including carbon atoms constitute a rotational form and at least one end of the rotational form is closed.

A twelfth aspect of the present invention is a solid polymer fuel cell, which comprises two electrodes at both surfaces of the solid polymer electrode films, wherein at least one of the electrodes includes a catalytic layer comprising a solid polymer electrolyte and carbon substances carrying a solid polymer electrolyte, the catalytic layer being formed on one side of a gas diffusion layer, and wherein the carbon substances in the catalytic layer are aggregates including at least one type of carbon molecules in a spherical form in which six-member rings including carbon atoms constitute a rotational form.

A thirteenth aspect of the present invention is a fuel cell electrode, which comprises carbon substances carrying at least a catalytic material, wherein the carbon substances are carbon nano-horn aggregates.

A fourteenth aspect of the present invention is any one of the above-mentioned solid polymer fuel cell electrodes, wherein the carbon substances and the solid polymer electrolyte form a combined matter.

A fifteenth aspect of the present invention is a fuel cell comprising any one of the above-mentioned fuel cell electrodes.

A sixteenth aspect of the present invention is a solid polymer fuel cell comprising the solid polymer fuel cell electrode.

A seventeenth aspect of the present invention is a solid polymer fuel cell, which comprises electrodes at both surfaces of the solid polymer electrode films, wherein at least one of the electrodes includes a catalytic layer comprising a solid polymer electrolyte and carbon substances carrying a catalytic material, the catalytic layer being formed on one side of a gas diffusion layer, and wherein the carbon substances in the catalytic layer are carbon nano-horn aggregates.

An eighteenth aspect of the present invention is a carbon nano-horn aggregate for use in a fuel cell.

A nineteenth aspect of the present invention is a carbon nano-horn aggregate for use in an electrode material of a fuel cell.

A twentieth aspect of the present invention is a carbon nano-horn aggregate for use in a solid polymer fuel cell.

A twenty-first aspect of the present invention is a carbon nano-hom aggregate for use in an electrode material of a solid polymer fuel cell.

A twenty-second aspect of the present invention is a method of producing a solid polymer fuel cell with a solid polymer electrolyte - catalyst combined fuel cell electrode, which comprises the step of forming and pressing the solid polymer electrolyte-catalyst combined fuel cell electrode including the monolayer carbon nano-horn aggregates to a solid polymer electrode film to produce an electrode - electrolyte integrated matter.

Brief Description of the Drawings

Fig. 1 is a conceptual view of an example of a monolayer carbon nano-horn aggregate used in a solid polymer electrolyte - catalyst combined electrode according to the present invention.
Fig. 2 is a basic structure of an example of a solid polymer electrolyte - catalyst combined electrode comprising monolayer carbon nano-hom aggregates according to the present invention.
Fig. 3 is a conceptual view of an example of carbon nano-horn aggregates used in a fuel cell electrode according to the present invention.

Best Mode for Carrying Out the Invention

Referring to the figures, the fuel cell electrode and the fuel cell comprising the same according to the present invention will be described below in detail.

According to the present invention, a fuel cell electrode comprises carbon substances carrying at least a catalytic material, wherein the carbon substances are aggregates including at least one type of carbon molecules in which six-member rings including carbon atoms constitute a rotational form and at least one end of the rotational form is closed.

The term "six-member rings including carbon atoms constitute a rotational form" herein means a structure that six-member rings including carbon atoms are disposed along a surface of a rotational form. In other words, the flat surfaces of the six-member rings are disposed along a surface constituting the rotational form. The term "rotational form" herein means not only a complete cylinder or cone, but also irregular shapes with non-uniform diameters, bent shapes, distorted shapes, and shapes with convexoconcave sides. The rotational form has a section that is not only a complete circle, but also an ellipse or different shapes with respect to the area of the section. The six-member rings including carbon atoms are disposed not only on a regular basis, but also on an irregular basis. In addition, the six-member rings are arranged not only perpendicularly, or at a predetermined angle to the axes, but also irregularly. In some cases, the six-member rings are arranged spirally to the axes.

At least one end of the carbon molecules may be closed. The carbon molecules may be closed in any shape, i.e., in cone shape. It is also contemplated that carbon five-member or seven-member rings are positioned at at least one end of the carbon molecules, and the end may be or may not be closed. Other shapes may also be contemplated.

At least one type of carbon molecules is aggregated to form aggregates. Only carbon molecules having the same shape may be aggregated. The carbon molecules having different shapes, for example, different rotational forms, may be aggregated. Any other substances may be aggregated with the carbon molecules. The carbon molecules are aggregated by attracting each other with any force that can be applied to the molecules such as van der Waals forces. The carbon molecules may be aggregated spherically. The term "spherical" herein means not only a complete sphere, but also an ellipse, a donut-like shape and others. When the carbon molecules are aggregated spherically, a center part of the structure is not apparent. The center part may be hollow, or be almost filled with the carbon molecules. Alternatively, a carbon nano-tube may be rolled like a ball to form the center part.

Preferably, the carbon molecules are aggregated spherically and radially. The term "radially" herein means that the ends of the carbon molecules extend outwardly so that the axis directions of the carbon molecules constitute the radius of the sphere. When the ends are closed, the carbon molecules are aggregated such that the closed ends extend outwardly. When the ends are closed in cone shapes, the carbon molecules are aggregated such that the apexes of the cone shapes extend outwardly.

The above-mentioned aggregates having specific structures have very large specific surface areas. When the aggregates are used as the carbon substances of the fuel cell electrodes, the fuel cell properties can be improved significantly, as described later.

Typically, when the fuel cell electrodes are made of carbon substances, the catalytic material is adsorbed on the surfaces of the carbon substances. When the carbon substances have a small average particle size so that the electrodes have large specific surface areas, the amount of the catalytic material is increased. Advantageously, improved fuel cell properties are expected.

However, in the solid polymer electrolyte - catalyst combined fuel cell electrode, the solid polymer electrolyte that conducts the hydrogen ions unfavorably cannot penetrate into too small pores.

Even if the hydrogen ions are generated by the electrode reaction within the very small pores, they are not conducted to the solid polymer electrolyte in the electrode. As a result, the hydrogen ions cannot reach the positive electrode, and thus the fuel cell properties cannot be improved.

The electrode reaction in the fuel cell proceeds successfully as long as three phases of the electrode (carbon substances), the catalyst and the electrolyte coexist. It is very difficult to have the three phases coexist. As described above, the carbon particles and the fuel cell properties have not been optimized. The optimum structure of the fuel cell electrode has not been achieved simply by controlling the particle sizes or the surface areas of the carbon substances.

In other words, very large specific surface areas alone cannot realize coexistence of the three phases, i.e., the electrode, the catalyst and the electrolyte. Thus, it is impossible to improve the fuel cell properties.

Through intense studies, the present inventor has found that coexistence of the three phases can be achieved when the above-mentioned fuel cell electrode includes the aggregates of the carbon molecules, whereby the catalytic efficiency can be improved significantly. When the aggregates according to the present invention are used as the carbon substances of the fuel cell electrode, the conditions are most suitable for achieving the above-described three phase coexistence. The conditions are as follows: sizes and shapes of sites on which the catalytic material is carried, the amount and the dispersibility of the catalytic material carried, sizes and shapes of sites into which the electrolyte penetrates, and the amount and the dispersibility of the penetrating electrolyte. Thus, a fuel cell electrode having a suitable structure can be provided.

According to the present invention, the fuel cell electrode including the carbon particles carrying at least a catalytic material contains the carbon nano-hom aggregates used as the carbon particles.

Recently, a monolayer carbon nano-hom structure where monolayer carbon nano-horns are aggregated spherically has been found by the present inventors as disclosed in Japanese Unexamined Patent Application Publication No.2001-64004. The monolayer carbon nano-horn is a new carbon modification comprising only carbon atoms. The Publication describes that the monolayer carbon nano-horn structure is used in various fields in which active carbon, carbon fibers, active carbon fibers, fullerenes, and carbon nano-tubes are used. An example of application includes catalyst carrying materials. However, as described above, very large specific surface areas cannot realize coexistence of the three phases, i.e., the electrode, the catalyst and the electrolyte. Thus, it is impossible to improve the fuel cell properties.

Through intense studies, the present inventor has found that coexistence of the three phases can be achieved when the fuel cell electrode includes the carbon nano-horn aggregates, whereby the catalytic efficiency can be improved significantly. When the carbon nano-horn aggregates are used as the carbon particles of the fuel cell electrode, the conditions are most suitable for achieving the above-described three phase coexistence. The conditions are: sizes and shapes of sites on which the catalytic material is carried, the amount and the dispersibility of the catalytic material carried, sizes and shapes of sites into which the electrolyte penetrates, and the amount and the dispersibility of the penetrating electrolyte. Thus, a fuel cell electrode having a suitable structure can be provided.

The carbon nano-homs are aggregated by attracting each other with any force that can be applied to the carbon nano-horns such as van der Waals forces. The carbon nano-homs may be aggregated spherically. The term "spherical" herein means not only a complete sphere, but also an ellipse, a donut-like shape and others. The carbon nano-homs have tube shapes like carbon nano-tubes, and an axial length of about 10 to 80 nm, or about 30 to 50 nm.

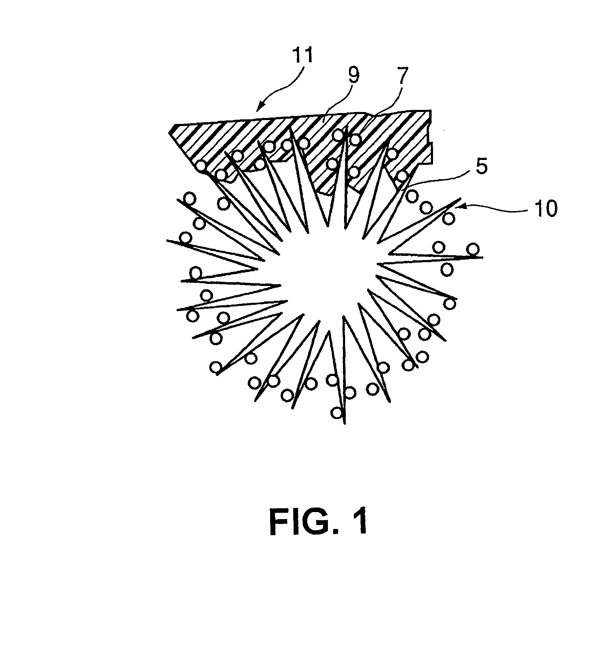

Referring to Fig. 1, carbon nano-homs 5 are aggregated radially by van der Waals forces. When the carbon nano-horn aggregate 10 is nearly spherical, its radius direction is nearly perpendicular with each axial direction of the carbon nano-horns 5 having tube shapes. The ends of the carbon nano-horns 5 extend outwardly and radially to form the carbon nano-horn aggregate 10. Thus, the aggregate has a specific structure and therefore has a very large specific surface area. The catalytic material and the electrolyte can be formed integrally using suitable amounts or types with suitable dispersibility. In Fig. 1, the catalytic material 7 and the solid polymer electrolyte 9 are disposed only on a part of the carbon nano-horn aggregate 10. In an actual construction, they are entirely disposed over the carbon nano-horn aggregates 10.

The structure, especially the center part of the structure, of the carbon nano-hom aggregate 10 is not apparent and is not especially limited. The center part may be hollow, or almost filled with the carbon molecules. Alternatively, the carbon nano-tube may be rolled like a ball to form the center part.

Plural sets of the above-mentioned aggregates or the carbon nano-horns aggregates 10 may form secondary aggregates. Plural sets of the secondary aggregates in the solid electrolyte constitute the electrode. The catalytic material 7 can also be efficiently carried into the insides of the secondary aggregates. The solid polymer electrolyte 9 can also penetrate into the insides of the secondary aggregates. Thus, excellent catalytic efficiency can be provided. The catalytic efficiency in this case is as high as in the case that the independently-dispersed aggregates are integrated with the solid polymer electrolyte 9. The aggregates herein mean the carbon nano-horn aggregates 10 as well as the above-mentioned aggregated carbon molecules.

Some of the carbon molecules or carbon nano-horns 5 for use in the present invention may be aggregated and fused. The term "fused" herein means that some of the carbon molecules or carbon nano-homs 5 are chemically bonded by applying any energy, or bonded with stronger force than the aggregation. When the independently-dispersed aggregates are integrated with the solid polymer electrolyte, the catalytic material is well supported. In this case, the catalytic material is also adequately supported by the fused carbon molecules or carbon nano-horns 5 so that the catalytic material is incorporated into the inside of the fused carbon molecules or carbon nano-horns 5. Thus, the catalytic efficiency can be high.

The carbon molecules or the carbon nano-horns 5 are integrated with the solid polymer electrolyte 9 by combining them with adequate dispersibility.

The carbon nano-horns 5 having tube shapes like carbon nano-tubes not always include cylindrical portions with uniform diameters. The cylindrical portions may have non-uniform diameters and may be bent. In some cases, both cylindrical portions with uniform and non-uniform diameters may be included.

In the carbon nano-homs 5 having tube shapes like carbon nano-tubes and including cylindrical portions with uniform systems, the spaces between walls thereof are greater than those of the nano-horns including the cylindrical portions that have non-uniform diameters and are bent, when both nano-horns are aggregated at the same space. Advantageously, the electrolyte with high viscosity can be easily penetrated into the former carbon nano-horns 5. In the carbon nano-horn aggregates 10 including the carbon nano-horns 5 that have non-uniform diameters and are bent, the carbon nano-homs 5 tend to be bonded to each other at the bent portions. Advantageously, the electrode 11 having good binding properties can be provided.

The tubes of the carbon nano-horns 5 may have a monolayer or multilayer structure. "Monolayer" or " multilayer" is a term also used for describing the structure of the carbon nano-tube. A single layer is a "monolayer", and plural layers are a "multilayer." In a monolayer structure, the tube has a thickness corresponding to a single carbon atom. In a multilayer structure, plural tubes having a thickness corresponding to a single carbon atom are disposed concentrically. Therefore, the multilayer structure becomes thick.

In the monolayer structure, each of the carbon nano-horns 5 has a small diameter to increase the surface area. Advantageously, a large amount of a fine catalytic material 7 can be adsorbed with high dispersibility. In the multilayer structure, the tubes of the carbon nano-horns 5 become dense, which are stronger than those having a monolayer structure. The monolayer or multilayer can be formed by adjusting the manufacturing conditions, for example, atmosphere, or temperature.

According to the present invention, one end of each carbon molecule or carbon nano-hom may be closed in a conical shape. Preferably, the angle between the base lines is 15 to 40°, but is not especially limited thereto. As shown in Fig. 1, in the carbon nano-hom aggregate 10, plural conical portions protrude like horns from the center due to van der Waals forces applied between conical portions.

The same applies to the aggregates including the carbon molecules according to the present invention. The catalytic material 7 is carried at the conical portions of the carbon nano-horns 5 in the carbon nano-horn aggregates 10. The catalytic material 7 is carried at the carbon molecules in the aggregates including the carbon molecules. A very large amount of catalytic material can be carried in such a spherical three-dimensional structure. As shown in Fig. 1, the solid polymer electrolyte 9 penetrates from the outside to the inside of the monolayer carbon nano-horns. The solid polymer electrolyte 9 can easily penetrate into the monolayer carbon nano-horn aggregate from the outside, since each of the monolayer carbon nano-homs 5 has a conical shape with a pointed tip, and a wide space exist at the tip. Therefore, the solid polymer electrolyte 9 always exists on the carbon nano-horns 5 that carry the catalyst material 7. As a result, the contact area of the catalytic material 7 and the solid polymer electrolyte 9, i.e., the reacting area, increases. The hydrogen ions generated by the electrode reaction are effectively conducted to the solid electrolyte, thereby improving the catalytic efficiency.

According to the present invention, the carbon molecules or carbon nano-horns 5 in conical shapes may have enlarged or rounded apexes at their ends. These are different from the conical closed ends in that the points are rounded. The carbon nano-horn aggregate 10 has a smooth surface with no angular protrusions. When the carbon nano-horn aggregate having a smooth surface is used as the electrode, the same degree of catalyst adsorption effects is provided as when the conical closed aggregate is used. In addition, flowability and compatibility of the aggregate, or of the carbon nano-horn aggregate 10 are advantageously improved.

The tips of the aggregates can obtain different shapes by changing the inert gas atmosphere, the pressure and the temperature.

According to the present invention, the carbon molecules or carbon nano-horns 5 have a length of 10 to 80 nm, or 30 to 50 nm in axial directions. The length is shorter than that of normal carbon nano-tubes. The reason is not apparent, but it is considered that the carbon molecules or the carbon nano-horns 5 have shapes that are easily aggregated due to van der Waals forces. The carbon molecules or the carbon nano-horns have outside diameters of 1 to 10 nm in directions orthogonal to the axial directions. The term "outside diameter" herein means that an outside diameter of a rotational form that constitutes the carbon molecules, or the diameter of a tube of the carbon nano-horn 5 at the outermost side. Not only a complete circle, but also an ellipse or different shapes may be contemplated. In these cases, a longer diameter passing the center or around the center, but not limited thereto, is the "outside diameter."

A distance between the walls of adjacent carbon molecules or adjacent carbon nano-horns 5 may be 0.3 to 1 nm. The term "distance between walls" herein means the space between the outside walls of the carbon molecules or the carbon nano-horns 5 that form the aggregates. The term "adjacent" herein means neighboring, for example, one carbon molecule is next to the other carbon molecule, or one carbon nano-horn 5 is next to the other carbon nano-horn 5 in the aggregates. The distance between the walls may be changed depending on the shapes of the carbon molecules or the carbon nano-horns 5. For example, when conical-shaped carbon nano-horns 5 have non-uniform diameters and are aggregated such that the apexes extend outwardly, the distances between the walls of the carbon nano-horns 5 are small at approximate center, but become large as it proceeds to the outside. The distance between the walls of adjacent carbon nano-homs 5 is herein measured at the root thereof. Accordingly, when many carbon nano-horns 5 aggregate and protrude tightly on the surface, the distance between the walls becomes very small. When the carbon nano-horns 5 aggregate sparsely, the distance between the walls becomes large. The distance between the walls is at least 1.54 Angstrom that is a bond length between carbon and carbon.

The resultant properties are not limited by the size. Various carbon molecules or carbon nano-horns can be used depending on the types of fuel cell or their purposes.

The aggregates including carbon molecule aggregates or carbon nano-horn aggregates 10 have outside diameters of 10 to 200 nm. As described above, the aggregates are not always in a spherical shape, and may have different sizes depending on their shapes. The outside diameters are not limited to the above-specified range.

According to the present invention, the carbon molecules or carbon nano-horns 10 may have aspect ratios of 50 or less. The term "aspect ratio" herein means the ratio of the diameter orthogonal to the axis to the length in axial direction, i.e., the length in the axial direction / the outside diameter.

Any types of carbon molecules and any types of carbon nano-homs 5 may be used in various combinations including the same type, the same shape, different types, different shapes. Even though they are aggregated in any percentage or in any amount, the resultant fuel cell electrode can have excellent properties by selecting catalytic material and a suitable solid electrolyte suitable for the application.

When the aggregates are used as carbon substances to constitute the solid polymer electrolyte - catalyst combined electrode, there may be provided secondary aggregates obtained by aggregating a plurality of the aggregates. Pores each having a size of several nms to tens nms exist between the secondary aggregates. Therefore, the combined electrode will have a porous structure. The pores effectively contribute to the channel of the reaction gas such as oxygen and hydrogen. When the secondary aggregates are formed, the catalytic material can be carried to the inside of the secondary aggregates, and the solid polymer electrode can penetrate into the inside of the secondary aggregates, thereby providing excellent catalytic efficiency.

According to the present invention, when the monolayer carbon nano-horn aggregates having the specific structures, the aggregates including the carbon molecules and the carbon nano-horn aggregates are used as the carbon substances of the solid polymer electrolyte - catalyst combined electrode, the catalytic efficiency can be improved. Furthermore, a pore distribution can be provided naturally so that the reaction gas can be fed well. There is provided a highly desirable solid polymer fuel cell electrode.

According to the present invention, the carbon molecules or carbon nano-hom aggregates can generally be produced by a laser ablation method using a solid carbon single substance such as graphite as target under inert gas atmosphere at room temperature and at 760 Torr. When the conditions of the laser ablation are changed or an oxidation treatment after the production is employed, the shape, the diameter or the length of each carbon molecule or carbon nano-horn, the shape of its tip, the space between the carbon molecules or the carbon nano-homs, and the pore size between the carbon molecules or the carbon nano-horns can be controlled freely. Respective carbon nano-horns in the carbon nano-horn aggregates can be replaced with graphite nano-homs. In this case, the electroconductivity is improved, whereby the electrode can have further improved properties. In addition, when the above-mentioned carbon nano-horn aggregates are carried by the carbon fibers or the carbon nano-fibers, the fine structure of the solid polymer electrolyte - catalyst combined fuel cell electrode can be controlled. The carbon nano-horn aggregates are carried, for example, by heating and fusing tips of the monolayer carbon nano-horns to the carbon fibers or the carbon nano-fibers under vacuum. At least a part of the carbon molecule aggregates or the carbon nano-horn aggregates 10 has an incomplete part. The term "incomplete part" herein means a broken structural part. For example, a carbon - carbon bond in a six-member ring is partly broken, or a carbon atom therein is lost, which constitutes the carbon molecule or the carbon nano-horn 5. A vacancy or a bond with other kinds of molecules may be formed. The above-mentioned incomplete part may be large, i.e., a hole in the carbon six-member ring. Each of them is herein referred to as a "pore". The pore may have, without being especially limited thereto, a diameter of 0.3 to 5 nm. The pore may have nonlimiting any shapes. This pore is different from a micropore or a micropore between carbon nano-horn aggregates upon formation of the electrode using the above-mentioned carbon nano-hom aggregates 10.

When the aggregates having pores are used as electrode, the catalytic material such as platinum is preferentially adsorbed. Accordingly, a larger amount of the catalytic material can be adsorbed. The catalytic material can also be taken from the pores and be adsorbed, thereby significantly increasing adsorption capacity. Combined aggregates having pores with different diameters or shapes can be used.

It is also contemplated that the pores are used to weaken van der Waals forces applied to respective molecules or carbon nano-horns 5. Furthermore, an organic molecule or a functional group can be connected to a part of the pores.

The carbon nano-horn aggregates 10 having pores can be produced by oxidizing the carbon molecules or the carbon nano-homs 5. Oxidation is, for example, carried out by heating under controlled conditions including atmosphere, temperature and time. As for the pressure, an oxygen partial pressure may be controlled within a range of about 0 to 76 Torr, which depends on the gas type. The temperature can be set relatively low, such as about 250 to 700°C, or 256 to 600°C or less. The time for oxidation can be about 0 to 120 minutes. The oxidation conditions described above are controlled to provide the pores with any sizes on the walls and on the tips of the carbon molecules or the carbon nano-horns 5. The oxidation may be conducted in a single stage in which the temperature is kept constant within the above-specified range or in a multistage in which the temperature is varied within the above-specified range. Or, the temperature may be varied at any time. Alternatively, the oxidation may be conducted by heating the carbon nano-horn aggregates 10 in an acid solution having an oxygenation action such as nitric acid and hydrogen peroxide.

The pores can be formed by dispersing the aggregates in a solvent and irradiating them with ultrasonic waves. Examples of solvents include inorganic solvents, hydrocarbons, and organic solvents. The energy of the irradiating ultrasonic waves is not especially specified, since it is associated with the types or amount of the intended aggregates and the solvent, and with the irradiation time of the ultrasonic waves.

According to the present invention, foreign matters are mixed into the carbon molecules or the carbon nano-homs 5. The term "foreign matters" herein means substances other than the carbon molecules or the carbon nano-horns 5, but does not mean that carbon atoms are excluded.

Examples of foreign matters include gases such as hydrogen, metals, organometalic compounds, organic substances, complexes and inorganic solid compounds. These foreign matters can easily be taken into the carbon molecules or the carbon nano-horns by oxidizing the carbon nano-horns to provide the pores thereon as described above, and keeping the temperature so that the foreign matters are vaporized. For example, hydrogen is occluded within the carbon nano-horn aggregates used as a fuel, whereby the fuel can be provided efficiently.

According to the present invention, at least part of the aggregates may contain a functional group or functional groups. The functional group has a hydrophilic group, and is selected from a carbonyl group, a carboxyl group, a hydroxyl group, an ether group, an imino group, a nitro group and a sulfone group. By adding such functional groups, the aggregates or the carbon nano-homs that are inherently hydrophobic can be changed to be hydrophilic. Therefore, they become dispersible in an aqueous solvent. If they have small particle diameters, they can be water-soluble. Since they are easily dispersed in a solution, the electrode is advantageously produced, especially in the step of carrying the catalyst. Advantageously, if methanol is used as a fuel, the fuel highly penetrates into the electrode.

The functional group(s) can be introduced into the aggregates by acid-treating the aggregates with an acid solution having an oxygenation action such as sulfuric acid, nitric acid, hydrogen peroxide, a sulfuric acid - nitric acid mixed solution, and chloric acid. The acid treatment is conducted in a liquid phase at a temperature of about 0 to 180°C in a solution system (as long as the solution is liquid), and at a temperature at which the solvent is liquid in the organic solvent system.

The carbon molecules or the carbon nano-horns for use in the present invention may be fused. The term "fused" herein means that a plurality of the carbon molecules or the carbon nano-horns 5 are chemically bonded to decrease the contact resistance on the surfaces. Or, the contact areas of the carbon molecules, the carbon nano-horns 5 and the carbon nano-horn aggregates 10 are increased. In other words, the carbon nano-horn aggregates 10 are not simply mixed, but they are bonded tightly on the surface of the carbon nano-horns 5. They may be aggregated to constitute the secondary structure, which can be produced by heating the aggregates according to the present invention under vacuum. If the contact areas between a plurality of the carbon nano-horn aggregates 10 are small, the carbon nano-horn aggregates 10 resist each other to decrease the conductivity. However, when the carbon nano-horns 5 are fused, the contact areas between a plurality of the carbon nano-horn aggregates 10 become large, the particles are well contacted, and the contact resistance can be decreased. As a result, the resistance at the electrode can be decreased. The temperature for heating under vacuum is not especially limited, but may be about 400 to 2000°C.

According to the present invention, the carbon nano-horn aggregates 10 may have a missing part. The missing part results from deletion or removal of a part of the carbon nano-horns 5 by applying a physical force. For example, the carbon nano-horn 5 does not have a complete conical-shaped tip, but has a broken tip. Also, the carbon nano-horn 5 may have a broken root. The missing part also refers to the state that half of the carbon nano-horn aggregate 10 having a nearly spherical shape is deleted to be a hemispherical shape.

The aggregate is broken by, for example, physical or mechanical force, i.e., by ultrasonic wave milling.

The tips of the aggregates including the carbon molecules and the carbon nano-horns 5 are entangled complicatedly with each other like gears without spaces to inhibit the catalyst material 7 from adsorbing. The presence of the missing parts can promote the adsorption of the catalyst material 7. In other words, the missing parts can provide sites for adsorbing the catalytic material 7. By controlling the shape, the size, the number and the frequency of the incomplete part or the missing part, the preferable structure can be produced depending on the combination of the catalytic materials 7.

The fuel cell electrode of the present invention contains a mixture of the aggregates according to the present invention and the carbon nano-tubes as the carbon substances. The amount of the carbon nano-tubes is not especially limited. The carbon nano-tubes may be used at any percentage. The carbon nano-tubes may have any known shape. Carbon nano-tubes having a monolayer, a multilayer, any length and any diameter can be used depending on the intended use, as required. By mixing the aggregates according to the present invention with the carbon nano-tubes, the carbon nano-tubes are entangled around the aggregates. The carbon nano-horn aggregates 10 have a relatively high contact resistance, which induces a resistance loss. When the carbon nano-tubes having a high conductivity are disposed around the carbon nano-horn aggregates 10, they advantageously conduct electricity between the carbon nano-horn aggregates. Accordingly, mixing the carbon nano-tubes can further decrease the electrical resistance.

The fuel cell electrode of the present invention contains a mixture of the aggregates according to the present invention and the carbon micropowder as the carbon substances. As described above, the carbon nano-horn aggregates 10 have a relatively high contact resistance, which induces a resistance loss. However, mixing conventional carbon micropowder such as Ketchen black, acetylene black and amorphous carbon, and any carbon powder currently known such as fullerenes and nano-capsules can further decrease the electrical resistance. If the carbon nano-horns 5 of the aggregates 10 are monolayers, and the spaces between the aggregates 10 are very small, the carbon fibers with large outside diameters may not be penetrated therein. In this case, it is preferable that the carbon fibers with small outside diameters be used. One or more, or three or more of the carbon nano-horn aggregates 10, the carbon nano-tubes and the carbon fibers can be mixed.

According to the present invention, there agglomerates comprising one or more of the carbon nano-horn aggregates 10, the carbon nano-tubes and the carbon fibers can be used. The agglomerate comprising the carbon nano-horn aggregates 10 and the carbon nano-tubes, the carbon nano-horn aggregates 10 and the carbon fibers, or all three is produced by heating the mixture under vacuum unlike the mixture of the carbon nano-horn aggregates 10, the carbon nano-tubes and the carbon fibers. Accordingly, respective substances are fused, whereby the electrical contact resistance between the substances becomes small.

Several tens of the carbon nano-tubes may be collected due to van der Waals forces to form a bundle. In the agglomerate of the carbon nano-horn aggregates and the carbon fibers, the carbon nano-tubes may not form a bundle and be dispersed. Such agglomerate can be produced by the steps of irradiating the carbon nano-tubes in a solvent with ultrasonic waves to disperse the carbon nano-tubes into the solvent, and by adding the carbon nano-horn aggregates to the solvent to remove the solvent.

The same type or several types of any of the aggregates described above may be used, and may be combined with other substances such as the carbon nano-tubes and the carbon fibers. In order to provide the preferable electrode, it is possible to select desirable shapes, percentages and the like of the carbon nano-horns in the aggregates 10 depending on the type of the fuel cell and the catalytic material.

Depending on the intended use of the fuel cell electrode, any type of carbon molecules and carbon nano-horns 5, or any combination or mixing ratio of the aggregates can be used.

Examples of the catalytic material 7 include gold and platinum group metals such as platinum, rhodium, ruthenium, iridium, palladium, osmium, gold (Au), and alloys thereof. The catalytic material 7 is generally loaded by impregnation. Alternatively, the catalytic material can be loaded on the nano-horns 5 by evaporating carbon and the catalytic material at the same time, upon formation of the carbon nano-horn aggregates 10, for example, by a laser ablation method. By changing the conditions in the laser ablation method, the average crystal size of the catalytic material 7 can be controlled with high precision. When the carbon and the catalytic material are evaporated by laser ablation at the same time, a composite target containing carbon and the catalytic material is irradiated with the laser, or each of a carbon target and a catalytic material target is separately irradiated with the laser to evaporate them at the same time.

The fuel cell electrode comprising the electrode shown in Fig. 1 will be described.

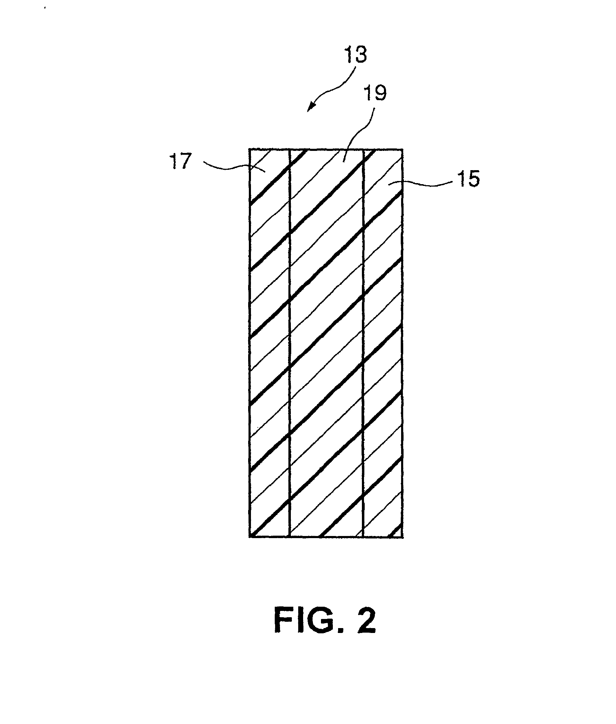

As shown in Fig. 2, an electrode - electrolyte integrated matter 13 comprises solid polymer electrolyte - catalyst combined electrodes 15 and 17 comprising monolayer carbon nano-horn aggregates formed on both sides of a solid polymer electrolyte film 19. The electrode - electrolyte integrated matter 13 is produced by forming and pressing the solid polymer electrolyte - catalyst combined fuel cell electrode including the monolayer carbon nano-horn aggregates to the solid polymer electrode film 19 using a hot press. The solid polymer fuel cell formed using the electrode - electrolyte integrated matter 13 can have an excellent catalytic efficiency and improved feeding properties of the reaction gas. Thus, the solid polymer fuel cell can have an improved efficiency.

The present invention provides carbon nano-horn aggregates for use in the fuel cell.

Non-limiting specific examples of the solid polymer fuel cell electrode and the fuel cell using the same of the present invention will be described below.

(EXAMPLE 1)

A polymer electrolyte colloid dispersion was produced by mixing an alcohol solution with n-butyl acetate while stirring, so that the content of solid polymer electrolyte was 0.1 to 0.4 $mg/cm^3$. The alcohol solution was a 5% Nafion solution made by Aldrich Chemical Co.

Then, 10 g of monolayer carbon nano-hom aggregates 10 were mixed with 500 g of dinitrodiamino platinum nitric acid solution containing 3% platinum while stirring. As a reducing agent, 60 ml of 98% ethanol were added to the mixture. The solution was agitated and blended at about 95°C, which is the boiling point of the solution, for 8 hours to load the catalytic material, i.e., platinum particles on the monolayer carbon nano-horn aggregates. The solution was filtered and dried to provide carbon particles on which the catalyst was loaded. About 50% of the weight based on the total weight of the monolayer carbon nano-horn aggregates was platinum loaded. As a comparative, Denka Black carbon particles were used, and the catalytic material was loaded thereon.

The powder of the monolayer carbon nano-horn aggregates on which the catalyst was loaded, and the comparative Denka Black powder were added to the polymer electrolyte colloid dispersion, respectively. The colloids were adsorbed on these carbon particles.

Each dispersion was treated using an ultrasonic disperser to become a paste. The paste was applied onto carbon paper, which was a gas diffusion layer, using a screen printing method. The carbon paper was heated and dried to produce a solid polymer fuel cell electrode.

The thus-produced two types of electrodes were measured for pore distribution by a gas adsorption method. The pores were mainly distributed within the range of several nm to tens nm. The electrode comprising Denka Black had a specific surface area of about 70 $m^2/g$. The electrode comprising the monolayer carbon nano-horn aggregates had a specific surface of as high as about 100 to 1500 $m^2/g$. As is apparent from the results, the solid polymer fuel cell electrode comprising the monolayer carbon nano-hom aggregates of the present invention having a large specific surface area can carry a larger amount of the catalytic material. Since pores having a size of several nm to tens nm mainly disposed between the spherical particles effectively function as channels for oxygen gas and hydrogen gas, the solid polymer fuel cell electrode of the present invention offers a very high performance.

(EXAMPLE 2)

Using similar procedures as in EXAMPLE 1, a polymer electrolyte colloid dispersion was produced by mixing an alcohol solution with n-butyl acetate while stirring, so that the content of solid polymer electrolyte was 0.1 to 0.4 $mg/cm^3$. The alcohol solution was a 5% Nafion solution made by Aldrich Chemical Co. Then, monolayer carbon nano-horn aggregates were produced using a laser ablation apparatus including two catalyst targets, i.e., platinum and graphite. The platinum target and the graphite target were irradiated with a carbon dioxide laser at room temperature and at 760 Torr under inert gas atmosphere at the same time. The powder of the monolayer carbon nano-horn aggregates produced was observed using a transmission electron microscope to have platinum particles with a size of about 10 nm thereon. Thus, the carbon particles on which catalysts were loaded were provided. It was verified that each monolayer carbon nano-horn had a graphite structure. Using is method, the process for loading the catalysts to the monolayer carbon nano-horn aggregates as in EXAMPLE 1 can be omitted. The powder of the monolayer carbon nano-horn aggregates was added to the polymer electrolyte colloid dispersion. Colloids were adsorbed on these carbon particles. The dispersion was treated using an ultrasonic disperser to be a paste. The paste was applied onto carbon paper, which was a gas diffusion layer, using a screen printing method. The carbon paper was heated and dried to produce a solid polymer fuel cell electrode.

(EXAMPLE 3)

Using similar procedures as in EXAMPLE 1, a polymer electrolyte colloid dispersion was produced by mixing an alcohol solution with n-butyl acetate while stirring, so that the content of solid polymer electrolyte was 0.1 to 0.4 $mg/cm^3$. The alcohol solution was a 5% Nafion solution made by Aldrich Chemical Co. Then, monolayer carbon nano-horn aggregates were produced by irradiating a single catalyst target, i.e., mixed platinum and graphite with a carbon dioxide laser at room mixed platinum and graphite with a carbon dioxide laser at room temperature and at 760 Torr under inert gas atmosphere at the same time. As in EXAMPLE 2, the powder of the monolayer carbon nano-horn aggregates produced was observed using a transmission electron microscope to have platinum particles with a size of about 10 nm thereon. Thus, the carbon particles on which catalysts were carried were provided.

Then, the monolayer carbon nano-hom aggregates were mixed with the carbon fibers or carbon nano-fibers. The mixture was heated under vacuum. The heated powder was observed using the transmission electron microscope. Some of the monolayer carbon nano-horns were fused to the carbon fibers or the carbon nano-fibers. The monolayer carbon nano-horn aggregates were carried by the carbon fibers or the carbon nano-fibers. The powder was added to the polymer electrolyte colloid dispersion. The colloids were adsorbed on these carbon particles. The dispersion was treated using an ultrasonic disperser to be a paste. The paste was applied onto carbon paper, which was a gas diffusion layer, using a screen printing method. The carbon paper was heated and dried to produce a solid polymer fuel cell electrode.

(EXAMPLE 4)

Using similar procedures as in EXAMPLE 1, the solid polymer fuel cell electrodes comprising the monolayer carbon nano-horn aggregates and Denka Black used as the carbon particles were produced. The electrodes were hot-pressed to both sides of a solid polymer electrolyte film, Nafion 115 manufactured by DuPont Corp., at a temperature of 100 to 200°C and a pressure of 10 to 100 $kg/cm^2$ to produce an electrode-electrolyte integrated matter. The integrated matter was put into a measuring device for a single fuel cell as a single cell.

Current-voltage properties of the cell were measured using the feed gas, i.e., oxygen and hydrogen (2 atm, 80°C). As a result, the cell comprising Denka Black used as the carbon particles had a voltage of about 620 mV at a current density of 700 $mA/cm^2$. The cell comprising the monolayer carbon nano-horn aggregates used as the carbon particles had a high output voltage of more than 700 mV. As is apparent from the results, high output power can be provided in a high current density range, since the reaction gas is fully fed. Also, it is apparent that the electrode comprising the monolayer carbon nano-horn aggregates has enough pores that function as gas channel.

Although Nafion solution made by Aldrich Chemical Co. was used as solid polymer electrolyte in the EXAMPLES, any solid polymer electrolyte can be used as long as it includes hydrogen ion exchange groups. Polymers having different molecular structures, i.e., perfluorovinyl ethers, polymers having different molecular length in side chains, or copolymers of styrene and vinylbenzene can be used and provide the same advantages.

In this EXAMPLE, the hydrogen - oxygen fuel cell using the solid polymer electrolyte film as electrolyte was taken as an example. It is also possible to apply to a fuel cell using reformed hydrogen that uses methanol, natural gas or naphtha as a fuel, a fuel cell that uses methanol, or a fuel cell that uses air as an oxidizer.

(EXAMPLE 5)

Using similar procedures as in EXAMPLE 1, a polymer electrolyte colloid dispersion was produced by mixing an alcohol solution with n-butyl acetate while stirring, so that the content of solid polymer electrolyte was 0.1 to 0.4 $mg/cm^3$. The alcohol solution was 5% Nafion solution made by Aldrich Chemical Co. Then, multilayer carbon nano-horn aggregates were produced by irradiating a single target, i.e., mixed platinum and graphite with a carbon dioxide laser at room temperature and at 760 Torr under inert gas atmosphere. Using the carbon nano-horn aggregates, a solid polymer fuel cell electrode was produced as in EXAMPLE 1. The electrode was put into a measuring device for a single fuel cell as a single cell.

Current-voltage properties of the cell were measured using the feed gas, i.e., oxygen and hydrogen (2 atm, 80°C). As a result, the cell comprising the monolayer carbon nano-horn aggregates used as the carbon particles had a high output voltage of more than 700 mV. As is apparent from the results, high output power can be provided in a high current density range, since the reaction gas is fully fed. Also, it is apparent that the electrode comprising the monolayer carbon nano-horrt aggregates has enough pores that function as gas channel.

(EXAMPLE 6)

Carbon nano-hom aggregates were produced by irradiating a graphite target with a $CO_2$ laser at room temperature and at 760 Torr under inert gas atmosphere by a laser ablation method. Carbon nano-tubes were produced using a catalyst at a high temperature of 1000°C or more by the laser ablation method. The carbon nano-tubes were observed using a transmission electron microscope. Each tube had an outside diameter of 30 nm or less, and a length of about 1 to 10 um. About 20 tubes were bundled. 1, 10 or 50% by weight of the carbon nano-tubes were respectively added to the carbon nano-horn aggregates, and sufficiently mixed in a ball mill. Thus, mixtures of the carbon nano-horn aggregates and the carbon nano-tubes were produced. Also, carbon powder comprising the carbon nano-horn aggregates alone, and the carbon powder comprising the carbon nano-tubes alone were produced. Then, 10 g of the five types of the carbon powders were respectively mixed with 500 g of dinitrodiamino platinum nitric acid solution containing 3% platinum as a catalyst while stirring. As a reducing agent, 60 ml of 98% ethanol were added to each mixture. Each solution was agitated and blended at about 95°C, which is the boiling point of the solution, for 8 hours to load the catalytic material, i.e., platinum particles on the carbon particles. The solution was filtered and dried to provide carbon particles on which the catalyst was loaded. About 50% of the weight based on the total weight of the monolayer carbon nano-horn aggregates was platinum loaded.

A polymer electrolyte colloid dispersion was produced by mixing an alcohol solution with n-butyl acetate while stirring, so that the content of solid polymer electrolyte was 0.1 to 0.4 mg/cm$^3$. The alcohol solution was a 5% Nafion solution made by Aldrich Chemical Co. Then, the five types of carbon particles on which the catalyst was carried were added to the polymer electrolyte colloid dispersion, respectively. The colloids were adsorbed on these carbon particles. Each dispersion was treated using an ultrasonic disperser to become a paste. The paste was applied onto carbon paper, which was a gas diffusion layer, using a screen printing method. The carbon paper was heated and dried to produce a solid polymer fuel cell electrode.

The thus-produced five types of electrodes were measured for pore distribution by a gas adsorption method. The pores were mainly distributed within the range of several nm to tens nm. There were no great differences between the samples. The carbon powders on which the catalyst was carried were observed using a transmission electron microscope. In the carbon powders comprising the carbon nano-horn aggregates alone, and in the carbon particles comprising 1, 10 or 50% by weight of the carbon nano-tubes, very small platinum catalyst particles each having a diameter of about 2 nm were dispersed uniformly on the surfaces of the carbon nano-hom aggregates. However, in the carbon powder comprising the carbon nano-tubes alone, the platinum catalyst particles were not well dispersed, and carried non-uniformly.

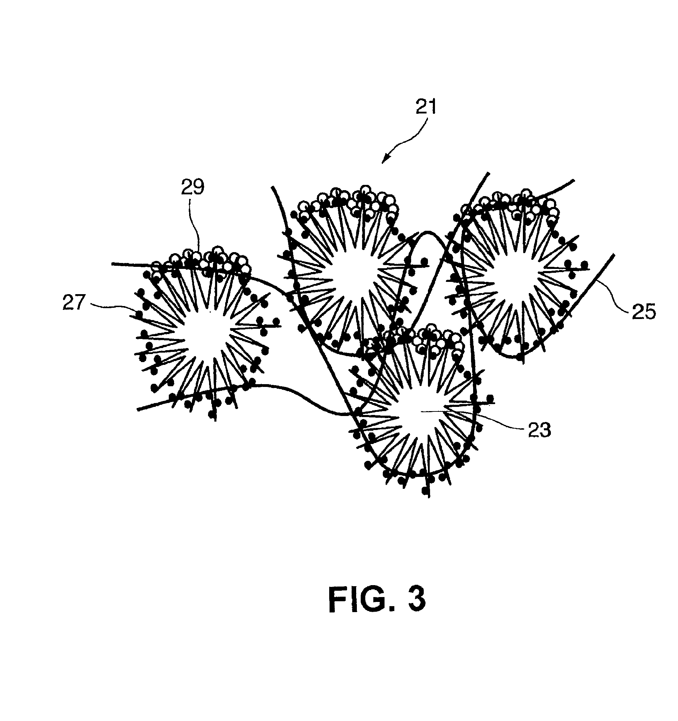

In the case of a solid polymer electrolyte combined electrode 21 as shown in Fig. 3, it was observed that each of the three types of carbon nano-tubes 25 were entangled around the carbon nano-horn aggregates 23. The electrode comprising the five types of carbon powders were measured for electrical resistance. The carbon powder comprising the carbon nano-horn aggregates 23 alone had an electrical resistance of about several Ωcm. The carbon powders comprising 1, 10 or 50% by weight of the carbon nano-tubes and the carbon powder comprising the carbon nano-tubes 25 alone had low electrical resistance values of 0.5 Ωcm or less. Accordingly, mixing the carbon nano-tubes 25 can further decrease the electrical resistance of the solid polymer fuel cell electrode.

(EXAMPLE 7)

Using similar procedures as in EXAMPLE 6, five types of solid polymer fuel cell electrodes including a powder comprising the carbon nano-horn aggregates alone, a powder comprising the carbon nano-horn aggregates to which 1, 10 or 50% by weight of the carbon nano-tubes were respectively added, and a powder comprising the carbon nano-tubes alone were produced. The electrodes were hot-pressed on both sides of a solid polymer electrolyte film, Nafion 112 manufactured by DuPont Corp., at a temperature of 100 to 180°C and a pressure of 10 to 100 kg/cm$^2$ to produce an electrode-electrolyte integrated matter. The integrated matter was put into a measuring device for a single fuel cell as a single cell.

Current-voltage properties of the cell were measured using the feed gas, i.e., oxygen and hydrogen (1 atm, 80°C). As a result, the powder comprising the carbon nano-horn aggregates alone had a voltage of about 600 mV at a current density of 600 mA/cm$^2$. By mixing the carbon nano-hom aggregates with 1, 10 or 50% by weight of the carbon nano-tubes, the powder comprising such aggregates had a high output voltage of 620 mV, 650 mV or 650 mV. However, the powder comprising the carbon nano-tubes alone had a decreased voltage of about 500 mV. According to the present invention, high output voltages can be achieved by mixing the carbon nano-horn aggregates with the carbon nano-tubes. This is because the electrical resistance of the catalyst electrode is decreased to inhibit resistance loss of the fuel cell, while a platinum catalyst is carried uniformly on the surfaces of the carbon nano-horn aggregates. The cell comprising the catalyst electrode of the carbon nano-tubes alone had a decreased output voltage, since the platinum catalyst is less dispersed.

(EXAMPLE 8)

1 g of carbon nano-horns and 1 g of acetylene black granular powder manufactured by Denki Kagaku Kogyo Kabushiki Kaisha were mixed in a ball mill to produce carbon powder. 1 g of chloroplatinic acid was dissolved in 100 ml of water. While the liquid temperature was kept at 50°C, 2 g of sodium hydrogen sulfite was added thereto for reducing the solution. Then, the solution was adjusted to have a pH of 5 with 1N sodium hydroxide solution, diluted with 350 ml of water. The carbon powder was added to the solution, and agitated for 30 minutes using a homogenizer. 100 ml of 30% hydrogen peroxide were added therein at a rate of 10 ml/min to convert the platinum compound into a platinum oxide colloid and to adsorb it to the carbon powder. While the liquid temperature was kept at 75°C, the solution was adjusted to have a pH of 5 and agitated for 12 hours. The solution was boiled for 10 minutes and was allowed to be cooled. Unnecessary salts were removed by centrifugation and washing. The solution was allowed to stand at 70°C for 12h and dried to provide a carbon powder on which the platinum oxide was adsorbed. At normal temperature, hydrogen was used to reduce the platinum oxide and to precipitate platinum particles on the carbon powder. 1 g of the catalyst-carrying carbon powder and 18 ml of a 5% Nafion solution made by DuPont Corp. were mixed to produce a paste. The paste was applied on carbon sheets each having a size of 1 cm$^2$ manufactured by Toray Industries, Inc. The sheets had been subjected to a water repellent finishing with PTFE. After the sheets were dried at 120°C they were hot-pressed on both sides of Nafion 117 manufactured by DuPont Corp., at a temperature of 150°C and a pressure of 20 kg/cm$^2$ to produce a fuel cell. Current-voltage properties of the resultant fuel cell were measured using hydrogen gas and oxygen gas as fuels at 55°C. As a result, the cell had a voltage of 650 mV at a current density of 600 mA/cm$^2$. The fuel cells comprising acetylene black alone and the carbon nano-horns alone had voltages of 560 mV and 600 mV, respectively. It was proven that the cell properties were improved when the carbon nano-horns or acetylene black were mixed to carry the catalyst. The same result was obtained when the carbon fibers were replaced with acetylene black.

(EXAMPLE 9)

Using similar procedures as in EXAMPLE 8, 800 mg of carbon nano-horns on which a platinum catalyst was loaded and 200 mg of Ketchen black on which platinum was loaded were mixed in a ball mill. The mixture was kneaded with 18 ml of a 5% Nafion solution to provide a paste. The paste was applied on a carbon sheet, dried and hot-pressed on Nafion 117 to produce a fuel cell. The cell had a voltage of 630 mV at a current density of 600 mA/cm$^2$ at 55°C. The fuel cells comprising Ketchen black alone had a voltage of 530 mV. It was proven that the cell properties were improved when the carbon nano-horns and the Ketchen black both carrying the catalyst were mixed in advance.

The carbon nano-horn aggregates produced in EXAMPLE 1 and the respective carbon powders were mixed at a percentage of 50%. The carbon powders on which platinum was carried were used to produce fuel cells. Each of the fuel cells was measured for a voltage using hydrogen gas and oxygen gas as fuels at a current density of 600 mA/cm$^2$ at 25°C. The results are set forth in TABLE 1.

TABLE 1

| Carbon | Nano-horn | Acetylene black | Ketchen black |
|---|---|---|---|
| Nano-hom | 600 mV | 650 mV | 600 mV |
| Acetylene black | - | 560 mV | - |
| Ketchen black | - | | 520 mV |

The carbon nano-horns on which platinum was loaded and respective carbon powders were mixed to produce fuel cells. Each of the fuel cells was measured for a voltage using hydrogen gas and oxygen gas as fuels at a current density of 600 mA/cm$^2$ at 55°C. The results are set forth in TABLE 2.

TABLE 2

| Carbon | Nano-hom | Acetylene black | Ketchen black |
|---|---|---|---|
| Nano-horn | 600 mV | 640 mV | 590 mV |
| Acetylene black | - | 560 mV | - |
| Ketchen black | - | - | 520 mV |

As described above, when the carbon nano-horns and respective carbon powders were mixed to constitute the fuel cells, it was proved that the cell properties were improved compared with the fuel cell that was constituted with the carbon powder alone or the carbon nano-hom alone.

(EXAMPLE 10)

Carbon nano-homs for use in a fuel cell electrode were treated in oxygen at 420°C for 10 minutes. It was verified that a BET specific area increased as shown in TABLE 3. The carbon nano-horns were observed by an electron microscope. As a result, catalyst metal was efficiently carried on the surfaces of the carbon nano-horn as compared with those of normal carbons such as acetylene black. The current-voltage properties of the cell were measured using hydrogen - oxygen fuels (1 atm, 80°C). As a result, it was verified that the cell had an improved voltage at a current density of 600 mA/cm$^2$.

(EXAMPLE 11)

As in EXAMPLE 10, carbon nano-horns for use in a fuel cell electrode were treated in oxygen at 500°C for 10 minutes. It was verified that the BET specific area increased and the cell had an improved voltage at a current density of 600 mA/cm$^2$ as shown in TABLE 3.

TABLE 3

| | Acetylene black | Carbon nano-hom | | |
|---|---|---|---|---|
| | | No oxidation | Treated at 420°C | Treated at 500°C |
| Specific surface area | 92 m$^2$/g | 320 m$^2$/g | 1,000 m$^2$/g | 1,500 m$^2$/g |
| Cell voltage | 480 mV | 600 mV | 660 mV | 700 mV |

(EXAMPLE 12)

Carbon nano-horns for use in a fuel cell were introduced into 70% nitric acid solution, agitated at room temperature, refluxed at 130°C for 5 hours, and neutralized with a sodium hydroxide solution. The carbon nano-horns were washed several times to add hydrophilicity. The carbon nano-horns were well dispersed uniformly in a solution containing a platinum - ruthenium salt as a catalyst. The electrode in which the loaded catalyst was reduced was observed by an electron microscope. As a result, the catalyst particles were dispersed finely and uniformly. It was verified that a direct methanol type fuel cell comprising acid-treated carbon nano-hom electrodes had an improved voltage at a current density of 200 mA/cm$^2$, compared with those comprising conventional acetylene black.

(EXAMPLE 13)

As in EXAMPLE 12, carbon nano-homs were introduced into 70% nitric acid solution and treated to provide hydrophilic carbon nano-horns. The electrodes were produced using the hydrophilic carbon nano-horns on which a platinum - ruthenium catalyst was loaded. It was verified that a direct methanol type fuel cell comprising these electrodes had an improved voltage at a current density of 200 mA/cm$^2$, compared with those comprising conventional acetylene black.

TABLE 4

| | Acetylene black | Carbon nano-horn | |
|---|---|---|---|
| | | Nitric acid treatment | Nitric acid treatment |
| Catalyst metal particle size | 5 to 10 nm | 1 to 2 nm | 1 to 2 nm |
| Cell voltage | 1400 mV | 450 mV | 430 mV |

(EXAMPLE 14)

When carbon nano-homs for use in a fuel cell electrode were heated at 1200°C for 1 hour under vacuum, it was verified by electron microscope that carbon nano-hom particles were aggregated to form a secondary structure. It was also verified that the particles between the carbon nano-horns were well contacted in the heat-treated carbon nano-horns to decrease electrical resistance. A fuel cell electrode was produced using the heat-treated carbon nano-horns by a normal solution method. It was verified that a direct methanol type fuel cell comprising the heat-treated carbon nano-hom electrode had a small electrode resistance and had an improved voltage at a current density of 200 mA/cm$^2$, as shown in TABLE 5.

TABLE 5

| | Untreated carbon nano-hom | Heat-treated carbon nano-hom |
|---|---|---|
| Electrode resistance | 2 Ω | 1.6 Ω |
| Fuel cell output | 430 mV | 460 mV |

(EXAMPLE 15)

1 g of carbon nano-horns was added to 200 ml of water. Using an ultrasonic homogenizer (SONIFIER450 manufactured by BRANSON Co., Ltd.), an ultrasonic treatment was performed at an output of 400 W for 1 hour to disperse the carbon nano-horns in water. To the carbon nano-horn dispersion, 1 g of chloroplatinic acid and 2 g of sodium hydrogen sulfite were added and agitated for 1 hour, while the liquid temperature was kept at 50°C. The resultant solution was adjusted to have a pH of 5 with 1N sodium hydroxide solution, diluted with 300 ml of water. 50 ml of 30% hydrogen peroxide were added therein to convert the platinum compound into platinum oxide. The solution was adjusted to have a pH of 5 with 1N sodium hydroxide solution to adsorb it to the carbon nano-homs. The resultant solution was filtered and washed with water to remove unnecessary sodium chloride and sodium sulfide. After the solution was dried at 70°C, carbon nano-horn powder on which platinum oxide was adsorbed was reduced with hydrogen to carry platinum particles on the carbon nano-horns. To 1 g of the resultant powder, 18 ml of a 5% Nafion solution made by DuPont Corp. was added and mixed. The mixture was applied on carbon sheets. After the sheets were dried at 120°C for 10 minutes, the mixture was deposited at a dried weight of 2 mg/cm$^2$. The sheets were hot-pressed on both sides of Nafion 117 to produce a fuel cell. The current-voltage properties of the resultant fuel cell were measured using hydrogen gas and oxygen gas as fuels at 55°C. As a result, the cell had a voltage of 600 mV at a current density of 600 mA/cm$^2$. The fuel cell had better cell properties compared with the cell without ultrasonic treatment that had a voltage of 570 mV.

(EXAMPLE 16)

1 g of acetylene black was added to 200 ml of water. Using an ultrasonic homogenizer (SONIFIER450 manufactured by BRANSON Co., Ltd.), an ultrasonic treatment was performed at an output of 400 W for 1 hour to disperse the acetylene black in water. To the acetylene black dispersion, 1 g of chloroplatinic acid and 2 g of sodium hydrogen sulfite were added and agitated for 1 hour, while the liquid temperature was kept at 50°C. The resultant solution was adjusted to have a pH of 5 with 1N sodium hydroxide solution, diluted with 300 ml of water. 50 ml of 30% hydrogen peroxide were added to convert the platinum compound into platinum oxide. The solution was adjusted to have a pH of 5 with 1N sodium hydroxide solution to adsorb it to the acetylene black. The resultant solution was filtered and washed with water to remove unnecessary sodium chloride and sodium sulfide. After the solution was dried at 70°C, acetylene black powder on which platinum oxide was adsorbed was reduced with hydrogen at normal temperature to carry platinum particles on the acetylene black. To 1 g of the resultant powder, 18 ml of a 5% Nafion solution made by DuPont Corp. was added and mixed. The mixture was applied on carbon sheets. After the sheets were dried at 120°C for 10 minutes, the mixture was deposited at a dried weight of 2 mg/cm$^2$. The sheets were hot-pressed on both sides of Nation 117 to produce a fuel cell. The current-voltage properties of the resultant fuel cell were measured using hydrogen gas and oxygen gas as fuels at 55°C. As a result, the cell had a voltage of 500 mV at a current density of 600 mA/cm$^2$. The fuel cell had better cell properties compared with the cell without ultrasonic treatment that had a voltage of 570 mV.

Advantageously, according to the present invention, by milling the carbon powder using the ultrasonic homogenizer before carrying the catalyst, defects or missing parts are produced on the carbon surfaces, and the aggregated carbon powder is dispersed. The defects or the missing parts of the carbon surfaces capture the catalyst to inhibit the growth of the catalyst. Accordingly, the catalyst can have a larger specific surface area. By dispersing the aggregated carbon powder, the solution that forms the catalyst can be penetrated into the parts that were not penetrated when the carbon was aggregated. Thus, the larger amount of the catalyst can be loaded uniformly. Increases in the amount and the specific surface area of the catalyst can improve the cell properties.

(EXAMPLE 17)

Carbon nano-horn aggregates were produced by irradiating a graphite target with a $CO_2$ laser at room temperature at 300 Torr or more of He, and at 300 Torr or more of $N_2$ using the laser ablation method. The produced carbon nano-horn aggregates were observed by an electron microscope. Tips of the carbon nano-horns had shapes where the apexes of the conical part were rounded.

Using similar procedures as in EXAMPLE 2, a solid polymer fuel cell electrode was produced using the carbon nano-horn aggregates. The electrode was put in a measuring device for a single fuel cell as a single cell.

The current-voltage properties of the cell were measured using the feed gas, i.e., oxygen and hydrogen (2 atm, 80°C). As a result, the cell had a high output voltage of more than 700 mV.

(EXAMPLE 18)

Carbon nano-horn aggregates were produced by irradiating a graphite target with a $CO_2$ laser at room temperature at 150 to 700 Torr of Ar using the laser ablation method. The produced carbon nano-hom aggregates were observed by an electron microscope. Tips of the carbon nano-horns had shapes where the apexes of the conical parts were rounded.

Using similar procedures as in EXAMPLE 17, a solid polymer fuel cell electrode was produced using the carbon nano-horn aggregates.

The electrode was put in a measuring device for a single fuel cell as a single cell.

The current-voltage properties of the cell were measured using the feed gas, i.e., oxygen and hydrogen (2 atm, 80°C). As a result, the cell had a high output voltage of more than 700 mV.

(EXAMPLE 19)

Carbon nano-horn aggregate powder was produced by irradiating a single target, i.e., mixed platinum and graphite with a carbon dioxide laser at room temperature at 760 Torr of an inert gas atmosphere. The carbon nano-horn aggregates were treated in oxygen at 420°C for 10 minutes. It was verified that they had increased specific area pores. The carbon nano-horn aggregates and ferrocene were added to a glass ampoule, and were allowed to sit at 150 to 250°C for about 30 hours under reduced pressure. Thereafter, the content was observed by an electron microscope. It was verified that ferrocene was entrained into the carbon nano-horns.

Using similar procedures as in EXAMPLE 18, the solid polymer fuel cell electrode was produced using the carbon nano-horn aggregates. The electrode was put in a measuring device for a single fuel cell as a single cell.

The current-voltage properties of the cell were measured using the feed gas, i.e., oxygen and hydrogen (2 atm, 80°C). As a result, the cell had a high output voltage of more than 700 mV.

Various modifications and alterations of the respective embodiments will become apparent without departing from the scope and spirit of this invention, and it should be understood that this invention is not to be unduly limited to the illustrative embodiments set forth herein.

As described above, according to the present invention, the carbon nano-horn aggregates having specific structures are used as the carbon substances of the fuel cell electrode. Thus, they are provided a fuel cell electrode and a fuel cell comprising the same that show high catalyst activity and have excellent feeding properties of the reaction gas.

Also, according to the present invention, the carbon molecule aggregates having the specific structures are used as the carbon substances of the fuel cell electrode, whereby excellent fuel cell properties can be provided.

## EP 1 383 186 A1

**Claims**

1. A solid polymer electrolyte - catalyst combined fuel cell electrode, comprising: a solid polymer electrolyte and carbon particles carrying a catalytic material, wherein the carbon particles are monolayer carbon nano-horn aggregates in which the monolayer carbon nano-horns are aggregated spherically.

2. A solid polymer electrolyte - catalyst combined fuel cell electrode according to claim 1, wherein the monolayer carbon nano-horns comprise monolayer graphite nano-horn aggregates including monolayer graphite nano-horns.

3. A solid polymer electrolyte - catalyst combined fuel cell electrode according to claim 1, wherein carbon fibers or carbon nano-fibers carry the monolayer carbon nano-horn aggregates.

4. A solid polymer electrolyte - catalyst combined fuel cell electrode according to claim 3, wherein the carbon fibers or carbon nano-fibers carry the monolayer carbon nano-horns by fusing tips of the monolayer carbon nano-horns.

5. A solid polymer electrolyte - catalyst combined fuel cell electrode according to claim 1, wherein the catalytic material is carried at a space formed by conical portions of the adjacent monolayer carbon nano-horns in the monolayer carbon nano-horn aggregates.

6. A solid polymer electrolyte - catalyst combined fuel cell electrode according to claim 1, wherein the monolayer carbon nano-homs carry the catalytic material at a space formed by conical portions of the monolayer carbon nano-horns by simultaneous evaporation of carbon and catalytic material using a laser evaporation method.

7. A solid polymer electrolyte - catalyst combined fuel cell electrode according to claim 1, wherein the catalytic material is at least one of the gold and platinum group metals, or an alloy thereof.

8. A solid polymer fuel cell, comprising two electrodes at both surfaces of a solid polymer electrode film, wherein at least one of the electrodes includes a catalytic layer comprising a solid polymer electrolyte and carbon particles carrying a catalytic material, the catalytic layer being formed on one side of a gas diffusion layer, and wherein the carbon particles are monolayer carbon nano-hom aggregates in which the monolayer carbon nano-homs are aggregated spherically.

9. A method of producing a solid polymer fuel cell with the solid polymer electrolyte - catalyst combined fuel cell electrode according to any one of claims 1 to 6, comprising the step of forming and pressing the solid polymer electrolyte - catalyst combined fuel cell electrode including the monolayer carbon nano-horn aggregates to a solid polymer electrode film to produce an electrode - electrolyte integrated matter.

10. A method of producing a solid polymer fuel cell electrode, comprising the steps of: mixing monolayer carbon nano-horn aggregates with an organic compound solution or a mixed solution including at least one of the gold and platinum group metals or an alloy thereof, adding a reducing agent to produce catalyst particles of gold and platinum group metals or an alloy thereof, whereby carbon particles of the monolayer carbon nano-horn aggregates carry the catalyst particles, adding a colloid dispersion of a polymer electrolyte to the carbon particles so that the colloids are adsorbed on the carbon particles and the colloid dispersion becomes a paste, and applying, heating and drying the paste on a carbon paper.

11. A method of producing a solid polymer fuel cell, comprising the steps of: mixing monolayer carbon nano-horn aggregates with an organic compound solution or a mixed solution including at least one of the gold and platinum group metals or an alloy thereof, adding a reducing agent to produce catalyst particles of gold and platinum group metals or an alloy thereof, whereby carbon particles of the monolayer carbon nano-horn aggregates carry the catalyst particles, adding a colloid dispersion of a polymer electrolyte to the carbon particles so that the colloids are adsorbed on the carbon particles and the colloid dispersion becomes a paste, applying, heating and drying the paste on a carbon paper, and forming and pressing the carbon paper to at least one surface of a solid polymer electrolyte sheet to produce a single cell.

12. A fuel cell electrode, comprising carbon substances carrying at least a catalytic material, wherein the carbon substances are aggregates including at least one type of carbon molecules in which six-member rings including carbon atoms constitute a rotational form and at least one end of the rotational form is closed.

**13.** A fuel cell electrode, comprising carbon substances carrying at least a catalytic material, wherein the carbon substances are aggregates including at least one type of carbon molecules in a spherical form in which six-member rings including carbon atoms constitute a rotational form.

**14.** A fuel cell electrode according to claim 12 or 13, wherein the carbon molecules are aggregated radially.

**15.** A fuel cell electrode according to claim 13 or 14, wherein at least one end of each of the carbon molecules is closed.

**16.** A fuel cell electrode according to claim 12, wherein the carbon molecules are aggregated spherically.

**17.** A fuel cell electrode according to any one of claims 12 to 16, wherein at least one end of each of the carbon molecules is closed in a conical shape.

**18.** A fuel cell electrode according to any one of claims 12 to 17, wherein the carbon molecules have cylindrical portions.

**19.** A fuel cell electrode according to any one of claims 12 to 17, wherein the carbon molecules have conical shapes.

**20.** A fuel cell electrode according to any one of claims 12 to 19, wherein one or more types of the carbon molecules are aggregated radially so that the apexes of the cones extend outwardly.

**21.** A fuel cell electrode according to any one of claims 13 to 20, wherein the carbon molecules are aggregated such that axial directions of the carbon molecules are almost parallel to the radius directions of the aggregates.

**22.** A fuel cell electrode according to any one of claims 12 to 21, wherein at least a part of the carbon molecules has an incomplete part.

**23.** A fuel cell electrode according to claim 22, wherein the incomplete part is a pore.

**24.** A fuel cell electrode according to claim 23, wherein the pore has a size of 0.3 to 5 nm.

**25.** A fuel cell electrode according to claim 22, wherein the incomplete part is a missing part.

**26.** A fuel cell electrode according to any one of claims 12 to 25, wherein foreign matters are mixed into the aggregates.

**27.** A fuel cell electrode according to claim 26, wherein the foreign matters are at least one or two or more metals, organometallic compounds or inorganic solid compounds.

**28.** A fuel cell electrode according to any one of claims 12 to 27, wherein at least a part of the aggregates has a functional group.

**29.** A fuel cell electrode according to any one of claims 12 to 28, wherein the aggregates have a hydrophilic functional groups on their surfaces.

**30.** A fuel cell electrode according to any one of claims 12 to 29, wherein at least a part of the aggregates has a part where a plurality of the carbon molecules are fused.

**31.** A fuel cell electrode according to any one of claims 12 to 30, wherein the aggregates carry at least a catalytic material at least on their surfaces, and the aggregates are integrated with the solid polymer electrolyte.

**32.** A fuel cell electrode according to any one of claims 12 to 31, wherein the carbon substances comprise secondary aggregates obtained by aggregating a plurality of the aggregates.

**33.** A fuel cell electrode according to claim 32, wherein the plurality of the aggregates is fused.

**34.** A fuel cell electrode according to claims 32 or 33, wherein the secondary aggregates carry at least the catalytic material therein, and are integrated with the solid polymer electrolyte.

**35.** A fuel cell electrode according to any one of claims 12 to 34, wherein excess energy is applied to the aggregates.

**36.** A fuel cell electrode according to any one of claims 12 to 35, wherein the aggregates are subjected to an oxidation treatment.

**37.** A fuel cell electrode according to any one of claims 12 to 36, wherein the aggregates are subjected to an ultrasonic treatment.

**38.** A fuel cell electrode according to any one of claims 12 to 37, wherein the aggregates are subjected to a mechanical force.

**39.** A fuel cell electrode according to any one of claims 12 to 38, wherein the aggregates are milled.

**40.** A fuel cell electrode according to any one of claims 12 to 39, wherein the aggregates are subjected to an acid treatment.

**41.** A fuel cell electrode according to any one of claims 12 to 40, wherein the aggregates are subjected to a heat treatment under vacuum.

**42.** A fuel cell electrode according to any one of claims 12 to 41, wherein the carbon molecules have lengths of 10 to 80 nm in axial directions.

**43.** A fuel cell electrode according to any one of claims 12 to 42, wherein the carbon molecules have outside diameters of 1 to 10 nm in directions orthogonal to the axial directions.

**44.** A fuel cell electrode according to any one of claims 12 to 43, wherein the carbon molecules have aspect ratios of 50 or less.

**45.** A fuel cell electrode according to any one of claims 12 to 44, wherein one end of each carbon molecule is closed in a conical shape, and the angle between the base lines is 15 to 40°.

**46.** A fuel cell electrode according to any one of claims 12 to 44, wherein the carbon molecules are terminated in such a way that the apexes of the cones at each end are rounded.

**47.** A fuel cell electrode according to any one of claims 12 to 46, wherein the carbon molecules are aggregated radially so that the apexes of the cones extend outwardly.

**48.** A fuel cell electrode according to any one of claims 12 to 47, wherein in the aggregates, the distance between adjacent walls of the carbon molecules is 0.3 to 1 nm.

**49.** A fuel cell electrode according to any one of claims 12 to 48, wherein the aggregates have outside diameters of 10 to 200 nm.

**50.** A fuel cell electrode according to any one of claims 12 to 49, wherein the carbon substances comprise a mixture of at least one of carbon nano-tubes, carbon micropowder, carbon fibers, fullerenes, and nano-capsules; and the aggregates.

**51.** A fuel cell electrode according to any one of claims 12 to 50, wherein the carbon substances comprise an agglomerate of at least one of carbon nano-tubes, carbon micropowder, carbon fibers, fullerenes, and nano-capsules; and the aggregates.

**52.** A fuel cell comprising the fuel cell electrode according to any one of claims 12 to 51.

**53.** A fuel cell according to claim 52, wherein platinum group metals or an alloy thereof are used as the catalytic material.

**54.** A solid polymer fuel cell electrode according to any one of claims 12 to 51, wherein the carbon substances and the solid polymer electrolyte form a combined matter.

**55.** A solid polymer fuel cell comprising the solid polymer fuel cell electrode according to claim 54.

**56.** A solid polymer fuel cell, comprising two electrodes at both surfaces of a solid polymer electrode film, wherein at least one of the electrodes includes a catalytic layer comprising a solid polymer electrolyte and carbon substances carrying a solid polymer electrolyte, the catalytic layer being formed on one side of a gas diffusion layer, and wherein the carbon substances in the catalytic layer are aggregates including at least one type of carbon molecules in which six-member rings including carbon atoms constitute a rotational form and at least one end of the rotational form is closed.

**57.** A solid polymer fuel cell, comprising two electrodes at both surfaces of a solid polymer electrode film, wherein at least one of the electrodes includes a catalytic layer comprising a solid polymer electrolyte and carbon substances carrying a solid polymer electrolyte, the catalytic layer being formed on one side of a gas diffusion layer, and wherein the carbon substances in the catalytic layer are aggregates including at least one type of carbon molecules in a spherical form in which six-member rings including carbon atoms constitute a rotational form.

**58.** A solid polymer fuel cell electrode according to any one of claims 55 to 57, wherein the catalytic material is a platinum group metal or an alloy thereof.

**59.** A fuel cell electrode, comprising carbon substances carrying at least a catalytic material, wherein the carbon substances are carbon nano-horn aggregates.

**60.** A fuel cell electrode according to claim 59, wherein the carbon substances carry at least the catalytic material, and are integrated with the solid polymer electrolyte.

**61.** A fuel cell electrode according to claim 59 or 60, wherein at least carbon nano-horns are aggregated in the carbon nano-hom aggregates.

**62.** A fuel cell electrode according to any one of claims 59 to 61, wherein at least the carbon nano-horns are aggregated spherically in the carbon nano-horn aggregates.

**63.** A fuel cell electrode according to any one of claims 59 to 61, wherein at least the carbon nano-horns are aggregated radially in the carbon nano-horn aggregates.

**64.** A fuel cell electrode according to any one of claims 59 to 63, wherein the carbon nano-hom aggregates comprise carbon nano-tubes.

**65.** A fuel cell electrode according to any one of claims 59 to 64, wherein the carbon nano-horn aggregates carry at least the catalytic material at least on their surfaces, and are integrated with the solid polymer electrolyte.

**66.** A fuel cell electrode according to any one of claims 59 to 65, wherein the carbon substances comprise secondary aggregates obtained by aggregating a plurality of the aggregates.

**67.** A fuel cell electrode according to claim 66, wherein the secondary aggregates carry at least the catalytic material therein, and are integrated with the solid polymer electrolyte.

**68.** A fuel cell electrode according to any one of claims 59 to 67, wherein the carbon nano-horns are monolayers.

**69.** A fuel cell electrode according to any one of claims 59 to 68, wherein the carbon nano-horns have mutilayers.

**70.** A fuel cell electrode according to any one of claims 59 to 69, wherein at least a part of the carbon molecules has an incomplete part.

**71.** A fuel cell electrode according to claim 70, wherein the incomplete part is a pore.

**72.** A fuel cell electrode according to claim 71, wherein the pore has a size of 0.3 to 5 nm.

**73.** A fuel cell electrode according to claim 70, wherein the incomplete part is a missing part.

**74.** A fuel cell electrode according to any one of claims 59 to 73, wherein foreign matters are mixed into the aggregates.

**75.** A fuel cell electrode according to claim 74, wherein the foreign matters are at least one or more metals, organometalic compounds or inorganic solid compounds.

**76.** A fuel cell electrode according to any one of claims 59 to 75, wherein at least a part of the aggregates has a functional group.

**77.** A fuel cell electrode according to any one of claims 59 to 76, wherein the aggregates have hydrophilic functional groups on their surfaces.

**78.** A fuel cell electrode according to any one of claims 59 to 77, wherein at least a part of the aggregates has a part where a plurality of the carbon molecules is fused.

**79.** A fuel cell electrode according to any one of claims 59 to 78, wherein the aggregates carry at least a catalytic material at least on their surfaces, and the aggregates are integrated with the solid polymer electrolyte.

**80.** A fuel cell electrode according to any one of claims 59 to 79, wherein the carbon substances comprise secondary aggregates obtained by aggregating a plurality of the aggregates.

**81.** A fuel cell electrode according to claim 80, wherein the plurality of the aggregates is fused.

**82.** A fuel cell electrode according to claims 80 or 81, wherein the secondary aggregates carry at least the catalytic material therein, and are integrated with the solid polymer electrolyte.

**83.** A fuel cell electrode according to any one of claims 59 to 82, wherein excess energy is applied to the carbon nano-horn aggregates.

**84.** A fuel cell electrode according to any one of claims 59 to 83, wherein the carbon nano-horn aggregates are subjected to an oxidation treatment.

**85.** A fuel cell electrode according to any one of claims 59 to 84, wherein the carbon nano-horn aggregates are subjected to an ultrasonic treatment.

**86.** A fuel cell electrode according to any one of claims 59 to 85, wherein the carbon nano-horn aggregates are subjected to a mechanical force.

**87.** A fuel cell electrode according to any one of claims 59 to 86, wherein the carbon nano-horn aggregates are milled.

**88.** A fuel cell electrode according to any one of claims 59 to 87, wherein the carbon nano-horn aggregates are subjected to an acid treatment.

**89.** A fuel cell electrode according to any one of claims 59 to 88, wherein the aggregates are subjected to a heat treatment under vacuum.

**90.** A fuel cell electrode according to any one of claims 59 to 89, wherein the carbon nano-horns have lengths of 10 to 80 nm in axial direction.

**91.** A fuel cell electrode according to any one of claims 59 to 90, wherein the carbon nano-horns have outside diameters of 1 to 10 nm in directions orthogonal to the axial directions.

**92.** A fuel cell electrode according to any one of claims 59 to 91, wherein the carbon nano-horns have aspect ratios of 50 or less.

**93.** A fuel cell electrode according to any one of claims 59 to 92, wherein one end of the carbon nano-horns is closed in a conical shape, and the angle between the base lines is 15 to 40°.

**94.** A fuel cell electrode according to any one of claims 59 to 92, wherein the carbon nano-homs are terminated in such a way that apexes of the cones at each one end are rounded.

**95.** A fuel cell electrode according to claim 94, wherein the carbon nano-horns are aggregated radially so that the rounded apexes of the cones extend outwardly.

**96.** A fuel cell electrode according to any one of claims 59 to 95, wherein in the carbon nano-horn aggregates, the distance between adjacent walls of the carbon molecules is 0.3 to 1 nm.

**97.** A fuel cell electrode according to any one of claims 59 to 96, wherein the carbon nano-horn aggregates have outside diameters of 10 to 200 nm.

**98.** A fuel cell electrode according to any one of claims 59 to 97, wherein the carbon substances comprise a mixture of at least one of carbon nano-tubes, carbon micropowder, and carbon fibers; and the carbon nano-horn aggregates.

**99.** A fuel cell electrode according to any one of claims 59 to 98, wherein the carbon substances comprise an agglomerate of at least one of carbon nano-tubes, carbon micropowder, and carbon fibers; and the carbon nano-horn aggregates.

**100.** A solid polymer fuel cell electrode according to any one of claims 59 to 99, wherein the carbon substances and the solid polymer electrolyte form a combined matter.

**101.** A fuel cell comprising the fuel cell electrode according to any one of claims 59 to 99.

**102.** A solid polymer fuel cell comprising the solid polymer fuel cell electrode according to claim 100.

**103.** A solid polymer fuel cell, comprising electrodes at both surfaces of a solid polymer electrode film, wherein at least one of the electrodes includes a catalytic layer comprising a solid polymer electrolyte and carbon substances carrying a catalytic material, the catalytic layer being formed on one side of a gas diffusion layer, and wherein the carbon substances in the catalytic layer are carbon nano-horn aggregates.

**104.** A fuel cell according to claim 101, wherein platinum group metals or an alloy thereof are used as the catalytic material.

**105.** A solid polymer fuel cell according to claim 102 or 103, wherein platinum group metals or an alloy thereof are used as the catalytic material.

**106.** A carbon nano-horn aggregate for use in a fuel cell.

**107.** A carbon nano-horn aggregate for use in an electrode material of a fuel cell.

**108.** A carbon nano-horn aggregate for use in a solid polymer fuel cell.

**109.** A carbon nano-horn aggregate for use in an electrode material of a solid polymer fuel cell.

**110.** A method of producing a solid polymer fuel cell with the solid polymer electrolyte - catalyst combined fuel cell electrode according to claim 100, comprising the step of forming and pressing the solid polymer electrolyte - catalyst combined fuel cell electrode including the monolayer carbon nano-horn aggregates to a solid polymer electrode film to produce an electrode - electrolyte integrated matter.

FIG. 1

FIG. 2

FIG. 3

# INTERNATIONAL SEARCH REPORT

| International application No. |
|---|
| PCT/JP02/02619 |

**A. CLASSIFICATION OF SUBJECT MATTER**
Int.Cl$^7$ H01M4/96, H01M4/88, H01M8/10

According to International Patent Classification (IPC) or to both national classification and IPC

**B. FIELDS SEARCHED**

Minimum documentation searched (classification system followed by classification symbols)
Int.Cl$^7$ H01M4/86-H01M4/98, H01M8/02, H01M8/10, C01B31/02

Documentation searched other than minimum documentation to the extent that such documents are included in the fields searched

| | | | | |
|---|---|---|---|---|
| Jitsuyo Shinan Koho | 1926–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)
JOIS

**C. DOCUMENTS CONSIDERED TO BE RELEVANT**

| Category* | Citation of document, with indication, where appropriate, of the relevant passages | Relevant to claim No. |
|---|---|---|
| X | WO 99/40023 A1 (Institutt For Energiteknikk), 12 August, 1999 (12.08.99), Whole document & JP 2002-502793 A | 106,108 |
| A | JP 2001-64004 A (Japan Science and Technology Corp.), 13 March, 2001 (13.03.01), (Family: none) | 1-110 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 April, 2002 (12.04.02) | 23 April, 2002 (23.04.02) |

| Name and mailing address of the ISA/ | Authorized officer |
|---|---|
| Japanese Patent Office | |
| Facsimile No. | Telephone No. |

Form PCT/ISA/210 (second sheet) (July 1998)